# EUROPEAN PATENT APPLICATION

(11) **EP 4 697 402 A1**
(43) Date of publication of application: **18.02.2026**
(21) Application number: 25195831.0
(22) Date of filing: 14.08.2025
(51) Int. Cl.: H01M 4/133, H01M 4/36, H01M 4/587, H01M 10/0525, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 16.08.2024 KR 20240109943
(71) Applicant: SAMSUNG SDI CO., LTD., Yongin-si, Gyeonggi-do 17084 (KR)
(72) Inventor: MORISAWA, Naoya, Yongin-si, Gyeonggi-do 17084 (KR)
(74) Representative: Michalski Hüttermann & Partner Patentanwälte mbB

(57) **Abstract**

Examples of the disclosure include a negative electrode for a rechargeable lithium battery and a rechargeable lithium battery. The negative electrode includes a current collector, and a negative electrode active material layer on the current collector. The negative electrode active material layer includes a I region, a II region and a III region which are separated by boundaries extending along a longitudinal direction. The II region includes a first crystalline carbon negative electrode active material, the I region and the III region include a second crystalline carbon negative electrode active material, and a tap density of the first crystalline carbon negative electrode active material is lower than a tap density of the second crystalline carbon negative electrode active material.

## Description

### BACKGROUND

### (a) Field

Example embodiments relate to a negative electrode for a rechargeable lithium battery, and a rechargeable lithium battery including the negative electrode.

### (b) Description of the Related Art

With increasing use of electronic devices that use batteries such as, e.g., mobile phones, laptop computers, electric vehicles, and the like, a demand for smaller, lighter and relatively high-capacity rechargeable lithium batteries is increasing. Improving performances of rechargeable lithium batteries may thus be advantageous.

Rechargeable lithium batteries typically include a positive electrode and a negative electrode including an active material capable of intercalating and deintercalating lithium ions, and an electrolyte solution, and electrical energy is produced by oxidation and reduction reactions when lithium ions are intercalated/deintercalated at the positive and negative electrodes.

### SUMMARY

One or more example embodiment includes a negative electrode for a rechargeable lithium battery exhibiting desired or improved impregnation of the electrolyte, thereby exhibiting improved cycle-life characteristics.

Another example embodiment includes a rechargeable lithium battery including the negative electrode.

One or more example embodiments include a negative electrode for a rechargeable lithium battery including a current collector; and a negative electrode active material layer disposed on the current collector, wherein the negative electrode active material layer includes an I region, a II region and a III region which are separated by boundaries extending along in a longitudinal direction, the II region includes a first crystalline carbon negative electrode active material, the I region and the III region include a second crystalline carbon negative electrode active material, and a tapped density of the first crystalline carbon negative electrode active material is lower than a tapped density of the second crystalline carbon negative electrode active material.

Another example embodiment includes a rechargeable lithium battery including the negative electrode; a positive electrode, and a non-aqueous electrolyte.

The negative electrode for a rechargeable lithium battery according to one or more example embodiments exhibit desired or improved impregnation of the electrolyte, thereby providing a rechargeable lithium battery exhibiting desired or improved cycle-life characteristic.

### BRIEF DESCRIPTION OF THE DRAWINGS

FIG. 1 is a cross-sectional view schematically showing a negative electrode for a rechargeable lithium battery, according to one or more example embodiments.
FIG. 2 is a plan view schematically showing a negative electrode for a rechargeable lithium battery, according to one or more example embodiments.
FIG. 3 is a drawing defining a length (width) of the II region of the negative electrode active material layer, according to one or more example embodiments.
FIG. 4 to FIG. 7 are a cross-sectional view schematically showing rechargeable lithium batteries, according to some example embodiment.

### DETAILED DESCRIPTION

Hereinafter, example embodiments are described in detail. However, these embodiments are examples, the present disclosure is not limited thereto and the present disclosure is defined by the scope of claims.

As included herein, when specific definition is not otherwise provided, it is understood that when an element such as a layer, film, region, or substrate is referred to as being "on" another element, the element can be "directly on" the other element, or intervening elements may also be present.

Unless otherwise specified in this specification, what is indicated in the singular may also include the plural. In addition, unless otherwise specified, "A or B" may mean "including A, including B, or including A and B."

As used herein, "the term "combination thereof may include a mixture, a laminate, a complex, a copolymer, an alloy, a blend, a reactant of constituents.

In the present disclosure, when a definition is not otherwise provided, a particle diameter may be an average particle diameter. The particle diameter indicates an average particle diameter (D50) of particles where a cumulative volume is about 50 volume% in a particle size distribution. The average particle diameter (D50) may be measured by a method known to those skilled in the art, for example, by a particle size analyzer, or by a transmission electron microscopic image, or a scanning electron microscopic image. In some embodiments, a dynamic light-scattering measurement device is used to perform a data analysis, and the number of particles is counted for each particle size range, and from this, the average particle diameter (D50) value may be easily obtained through a calculation. The particle size may be measured by a laser diffraction method. The laser diffraction may be performed by distributing particles to be measured in a distribution solvent and introducing it to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50 % standard of particle distribution in the measuring device.

In some example embodiments, an average particle diameter may be measured by various techniques, and for example, may be measured by a particle size analyzer.

In some example embodiments, a thickness may be measured by a SEM or a TEM image for the cross-section, but is not limited thereto, and it may be measured by any techniques, as long as it may measure the thickness in the related arts. The thickness may be an average thickness.

As used herein, soft carbon refers to graphitizable carbon materials and are readily graphitized by heat treatment at a high temperature, e.g., about 2800 °C, and hard carbon refers to non-graphitizable carbon materials and are not substantially and slightly graphitized by heat treatment. The terms soft carbon and hard carbon may be known in the related arts.

In some example embodiments, the crystalline carbon and the amorphous carbon may be distinguished through XRD measurement. The crystalline carbon includes natural graphite and artificial graphite. Natural graphite may indicate graphite which may be naturally generated by separating it from minerals, and when measured by XRD, the interplanar spacing (d002) of the (002) plane may be ≥ 3.350 Å to ≤ 3.360 Å. Artificial graphite may indicate graphite manufactured by graphitization, and when (e.g., when) measured by XRD, the interplanar spacing (d002) of the (002) plane may be ≥ 3.355 Å to ≤ 3.365 Å. Meanwhile, the amorphous carbon may have the interplanar spacing (d 002) of the (002) plane of about 3.34 Å or less, when measured by XRD. The XRD may be measured using CuKα ray as a target line with an X-ray diffraction analyzer (e.g., product name: X'Pert, manufacturer: Malvern Panalytical) and by removing a monochromator to improve a peak density resolution. The measurement condition may be 2θ=10 ° to 80 °, a scan speed (°/S) of 0.044 to 0.089, and a step size (°/step) of 0.013 to 0.039.

In some example embodiments, a weight-average-molecular weight may be measured by using a gel permeation chromatography.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

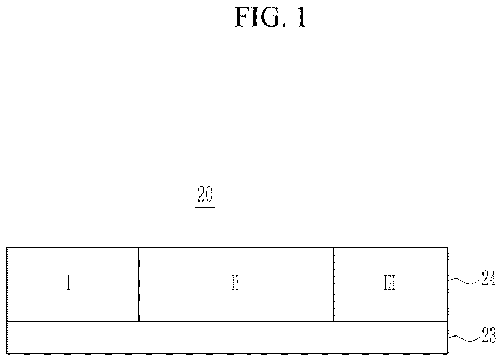

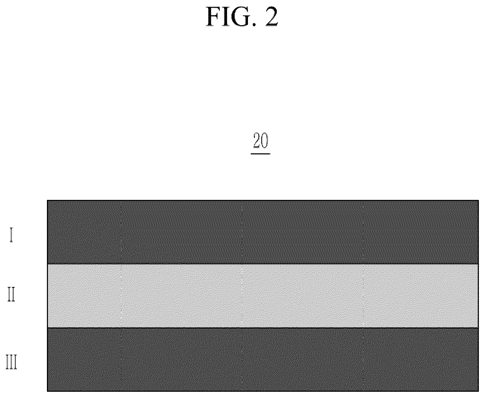

A negative electrode for a rechargeable lithium battery according to one or more example embodiments includes a current collector and a negative electrode active material layer disposed on the current collector, and the negative electrode active material layer includes a I region, a II region and a III region which are separated by boundaries extending along a longitudinal direction. When the negative electrode is illustrated in more detail, with respect to FIG. 1 which is the cross-sectional view, the negative electrode 20 includes a current collector 23 and a negative electrode active material layer 24, and the negative electrode active material layer 24 includes a I region, a II region, and a III region. The I region, the II region, and the III region are separated by boundaries extending along the longitudinal direction of the current collector 23, as shown in FIG. 2 which is a plan view of the negative electrode.

In an example, the II region includes the first crystalline carbon negative electrode active material, and the I region and the III region includes the second crystalline carbon negative electrode active material. A tapped density of the first crystalline carbon negative electrode active material is lower than a tapped density of the second crystalline carbon negative electrode active material.

When the II region corresponding to a center region at the longitudinal direction of the negative electrode active material layer, includes the first crystalline carbon negative electrode active material with the low tapped density, the electrolyte impregnation of the II region, e.g., the center region, may be enhanced, thereby improving the cycle-life characteristics. The enhancement of the electrolyte impregnation of the center region may effectively impregnate the electrolyte to a center region in the longitudinal direction, even when the height of the battery is increased. Thus, when the battery having an increased height in a range of about 70 mm or more, e.g., ≥ 70 mm to ≤ 100 mm has the configuration according to one or more example embodiments, the desired or improved cycle-life characteristics may be exhibited.

The negative electrode active material having the low tapped density may have a decreased denseness of the negative electrode active material layer, thereby enlarging spaces at which the electrolyte may be impregnated. Such a negative electrode active material with the low tapped density is included in the II region corresponding to the center thereof, rather than the I region and the III region which correspond to an edge thereof, and it allows to sufficiently impregnate the electrolyte to the center region.

In one or more example embodiments, the tapped density of the first crystalline carbon negative electrode active material may be equal to about 1.2 g/ cm³ or less, or in a range of ≥ 0.9 g/cm³ to ≤ 1.2 g/cm³. When the tapped density of the first crystalline carbon negative electrode active material is equal to about 1.2 g/cm³ or less, the electrolyte impregnation may be further enhanced.

The tapped density of the second crystalline carbon negative electrode active material may be equal to or more than about 1.2g/ cm³, about 1.2g/cm³ to about 1.5g/cm³, or more than about 1.2g/cm³, and equal to or about 1.5g/cm³ or less. When the tapped density of the second crystalline carbon negative electrode active material is equal to or more than about 1.2 g/cm³, the denseness of the negative electrode active material layer may be improved, thereby realizing the high-capacity battery.

In one or more example embodiments, the tapped density may be determined using a general tapped density measurement, and for example, may be measured by adding 100 cm³ of the specimen powder to a flat bottom test tube (Kuramochi Co., Ltd., Production KRS-406) with a scale section of a capacity of 150 cm³, closing the test tube with a stopper, and then dropping the specimen, and dropping the test tube 250 times from a height of 5 cm, and then measuring a weight (g) and volume (cm³) thereof.

In one or more example embodiments, the length (width) of the II region may be, based on 100 % length (width) of the negative electrode active material layer, in a range of ≥ 20 % to ≤ 54 %, ≥ 25 % to ≤ 54 %, or ≥ 30 % to ≤ 54 %. When the length (width) of the II region is included in the above range, the electrolyte impregnation effect caused by including the negative electrode active material with the low tapped density in the II region, may be sufficiently obtained.

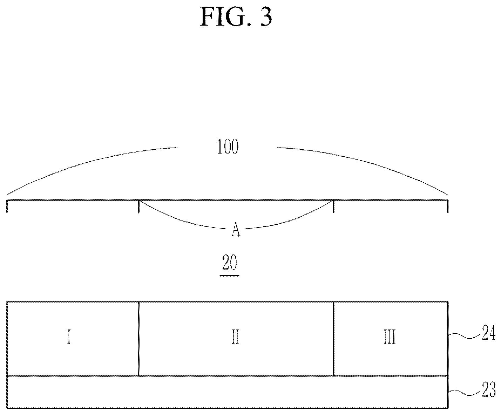

In one or more example embodiments, the width of the II region corresponds to a length "A" shown in FIG. 3, and thus, when the entire width of the negative electrode active material layer is converted to about 100 %, the length % of "A" may be in a range of ≥ 20 % to ≤ 54 %. In one or more example embodiments, the width of the II region is relevant, and each width of the I region and III region may be adjusted and thus, the width of the I region and III is not limited. For example, when the width of the II region is about 20 %, the I region and III region may be adjusted within about 80 %.

In one or more example embodiments, the first and the second crystalline carbon negative electrode active material may include at least one of natural graphite, artificial graphite, or combination thereof. For example, the first and the second crystalline carbon negative electrode active material may be at least one of unspecified shaped, substantially sheet shaped, flake shaped, substantially spherical shaped, or fiber shaped natural graphite, artificial graphite, or a combination thereof. The first and the second crystalline carbon negative electrode active material may be the same, or may be different. For example, when the tapped densities of the first and the second crystalline carbon negative electrode active material are different, the first and the second crystalline carbon negative electrode active material may be identically natural graphite or identically artificial graphite, or may have the same shapes.

The tapped density of such a negative electrode active material may be obtained by controlling the particle diameter of the negative electrode active material. For example, crystalline carbon having D10 of less than about 8 µm, may have a lower tapped density than crystalline carbon having of D10 of about 8 µm or more. D10 represents a particle diameter of particles where a cumulative volume is about 10 volume% in the particle size distribution. The particle size distribution may be measured by general techniques which are known to those skilled in the art, such as, e.g., a particle analyzer, or by a transmission electron microscope image, or a scanning electron microscope image.

For example, the first crystalline carbon negative electrode active material may be or include crystalline carbon with D10 that is less than about 8 µm, and the second crystalline carbon negative electrode active material may be or include crystalline carbon with D10 that is about 8 µm or more. The D10 of the first crystalline carbon negative electrode active material may be in a range of less than about 8 µm to about 5 µm, or ≥ 6 µm to ≤ 7 µm. The D10 of the second crystalline carbon negative electrode active material may be in a range of ≥ 8 µm to ≤ 11 µm, or ≥ 9 µm to ≤ 10 µm.

As the first crystalline carbon negative electrode active material and the second crystalline carbon negative electrode active material, commercial crystalline carbon with D10 satisfying the condition may be included, or the pulverized and sieved crystalline carbon may be included.

In another example embodiments, the tapped density of the negative electrode active material may also be obtained by controlling the shape of the negative electrode active material. For example, when crystalline carbon is prepared in a form of a spherical shape, or substantially spherical shape, the tapped density may be increased. For example, the second crystalline carbon negative electrode active material may have a substantially spherical shape, the first crystalline carbon negative electrode active material may have a non-spherical shape, and the sphericity of the second crystalline carbon negative electrode active material may be larger than the sphericity of the first crystalline carbon negative electrode active material. For example, the shape of crystalline carbon being substantially spherical does not indicate the tapped density that is equal to or more than about 1.2 g/cm³, and thus, among the substantially spherical crystalline carbon, only crystalline carbon having the tapped density that is equal to or more than about 1.2 g/cm³ may be included as the second crystalline carbon negative electrode active material.

In another example embodiment, among the commercial crystalline carbon, crystalline carbon with the tapped density of equal to or more than about 1.2 g/cm³ may be included as the second crystalline carbon negative electrode active material, and crystalline carbon with the tapped density that is equal to about 1.2 g/cm³ or less may be included as the first crystalline carbon negative electrode active material.

In one or more example embodiments, the II region may further include a second crystalline carbon negative electrode active material, and the second crystalline carbon negative electrode active material may be included at a smaller amount than the first crystalline carbon negative electrode active material. For example, in the II region, an amount of the first crystalline carbon negative electrode active material may be, based on the total 100 wt% of the first crystalline carbon negative electrode active material and the second crystalline carbon negative electrode active material, more than about 50 wt%, more than about 50 wt% and about 99 wt% or less, or ≥ 55 wt% to ≤ 90 wt%.

In the II region, a mixing ratio of the first crystalline carbon negative electrode active material to the second crystalline carbon negative electrode active material may be in a range of more than about 50 wt%: less than about 50 wt% to ≤ 99: about 1 wt%, or about 55:45 to about 90:10 wt%.

In one or more example embodiments, the I region and the III region may further include a first crystalline carbon negative electrode active material. For example, in each of, or in at least one of, the I region and the III region, an amount of the first crystalline carbon negative electrode active material may be, based on the total 100 wt% of the first crystalline carbon negative electrode active material and the second crystalline carbon negative electrode active material, equal to about 50 wt% or less, about 50 wt% or less and about 1 wt% or more, or ≥ 50 wt% to ≤ 20 wt%.

In each of, or at least one of, the I region and the III region, a mixing ratio of the first crystalline carbon negative electrode active material and the second crystalline carbon negative electrode active material may be in a range of about 50:50 to about 1:99 by weight ratio, or about 50:50 to about 10:90 by weight ratio.

In one or more example embodiments, the negative electrode active material layer may further include a binder and/or a conductive material.

For example, the negative electrode active material layer may include the negative electrode active material in a range of ≥ 90 wt% to ≤ 99 wt%, and the binder in a range of ≥ 1 wt% to ≤ 10 wt%, or may include the negative electrode active material in a range of ≥ 90 wt% to ≤ 99 wt%, the binder in a range of ≥ 0.5 wt% to ≤ 5 wt%, and the conductive material in a range of ≥ 0.5 wt% to ≤ 5 wt%.

The amounts of the negative electrode active material, the binder, and the conductive material are based on the total 100 wt% of the negative electrode active material layer. The amounts of the negative electrode active material, the binder, and the conductive material are not different in each of the I region, the II region, and the III region, and thus, in each region, there may be no need to limit the negative electrode active material, the binder, and the conductive material.

The binder improves binding properties of negative active material particles to one another and to a current collector. The binder may be or include at least one of a non-aqueous binder, an aqueous binder, a dry binder or combination thereof.

The non-aqueous binder may be or include at least one of polyvinylchloride, carboxylated polyvinylchloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)arcrelayated styrene-butadiene rubber, a (meth)acrylonitrile-butadiene rubber, a (meth)acryl rubber, a butyl rubber, a fluorine rubber, polyethylene oxide, polyvinylpyrrolidone, polyepichlorohydrin, polyphosphazene, poly(meth)acrylonitrile, an ethylenepropylene diene copolymer, polyvinylpyridine, chlorosulfonated polyethylene, latex, a polyester resin, a (meth)acryl resin, a phenol resin, an epoxy resin, polyvinyl alcohol, or a combination thereof.

A cellulose-based compound may be included as the aqueous binder, or the cellulose-based compound may be included together with the above aqueous binder. The cellulose-based compound may be referred to as a thickener, because the cellulose-based compound may impart viscosity, or the cellulose compound may be configured as a binder and thus, may be referred to as a binder. The cellulose-based compound may be included in a desired amount within the amount of the binder, and is not limited thereto. The cellulose-based compound may include one or more of carboxymethyl cellulose, hydroxypropylmethyl cellulose, methyl cellulose, or alkali metal salts thereof. The alkali metal may be or include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be included as a conductive material unless the electrically conductive material causes a chemical change in the battery. Examples of the conductive material may be or include a carbon-based material such as at least one of natural graphite, artificial graphite, carbon black, acetylene black, ketjen black, a carbon fiber, a carbon nanofiber, carbon nanotube, or the like; a metal-based material of a metal powder or a metal fiber including at least one of copper, nickel, aluminum, silver, and the like; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, and a combination thereof.

### Rechargeable lithium battery:

Another example embodiment includes a rechargeable lithium battery including the negative electrode, a positive electrode, and a non-aqueous electrolyte. The rechargeable lithium battery according to one or more example embodiments may be or include a cylindrical battery.

### Positive electrode:

The positive electrode may include a current collector, and a positive electrode active material layer on the current collector. The positive electrode active material layer includes a positive electrode active material, and may further include a binder and/or a conductive material.

For example, the positive electrode may further include an additive that may be configured as a sacrificial positive electrode.

An amount of the positive active material may be in a range of ≥ 90 wt% to ≤ 99.5 wt% based on 100 wt% of the positive active material layer, and amounts of the binder and the conductive material may be respectively in a range of ≥ 0.5 wt% to ≤ 5 wt% based on 100 wt% of the positive active material layer.

The positive active material may include a compound (lithiated intercalation compound) that is capable of intercalating and deintercalating lithium. In some example embodiments, at least one of a composite oxide of lithium and a metal such as or including at least one of cobalt, manganese, nickel, or combinations thereof may be included.

The composite oxide may be or include a lithium transition metal composite oxide, and examples thereof may include at least one of lithium nickel-based oxide, lithium cobalt-based oxide, lithium manganese-based oxide, lithium iron phosphate-based compound, cobalt-free nickel-manganese-based oxide, or a combination thereof.

For example, the following compounds represented by any one or more of the following chemical formulas may be included. LiₐA_{1-b}X_{b}O_{2-c}D_{c} (0.90≤a≤1.8, 0≤b≤0.5, 0≤c≤0.05); Lia_{M}n_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li _{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

For example, the positive electrode active material may be or include a high nickel-based positive electrode active material having a nickel amount that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may exhibit high capacity, and may be applied to a high-capacity, high-density rechargeable lithium battery.

The binder is configured to improve binding properties of positive electrode active material particles with one another, and with a current collector. Examples of the binder may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, or the like, but are not limited thereto.

The conductive material is included to provide electrode conductivity, and any suitable electrically conductive material may be included as a conductive material unless the electrically conductive material causes a chemical change in the battery. Examples of the conductive material may include a carbon-based material such as at least one of natural graphite, artificial graphite, carbon black, acetylene black, Ketjen black, carbon fiber, carbon nanofiber, carbon nanotube, or the like; a metal-based material of a metal powder or a metal fiber including at least one of copper, nickel, aluminum, silver, or the like; a conductive polymer such as a polyphenylene derivative; or a mixture thereof.

The current collector may include Al, but is not limited thereto.

### Electrolyte:

The electrolyte for a rechargeable lithium battery may include at least one of a non-aqueous organic solvent and a lithium salt.

The non-aqueous organic solvent may be configured as a medium that transmits ions taking part in the electrochemical reaction of a battery.

The non-aqueous organic solvent may include at least one of a carbonate-based, ester-based, ether-based, ketone-based, alcohol-based, aprotic solvent, or a combination thereof

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include at least one of methyl acetate, ethyl acetate, n-propyl acetate, dimethyl acetate, methyl propionate, ethyl propionate, decanolide, γ-butyrolactone, mevalonolactone, valerolactone, caprolactone, or the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, or the like. The ketone-based solvent may include cyclohexanone, or the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, or the like.

The organic solvent may be included alone or in a mixture of two or more solvents.

When the carbonate-based solvent is included, the cyclic carbonate and the linear carbonate may be included together therewith, and the cyclic carbonate and the linear carbonate may be mixed at a volume ratio in a range of about 1:1 to about 1:9.

The electrolyte may further include at least one of vinylethyl carbonate, vinylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, or a combination thereof, as an additive.

The lithium salt dissolved in an organic solvent is configured to supply a battery with lithium ions, to operate the rechargeable lithium battery, and to improve transportation of the lithium ions between positive and negative electrodes. Examples of the lithium salt include one or at least two supporting electrolyte salt such as or including at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), where x and y are an integer of 1 to 20, lithium trifluoromethane sulfonate, lithium tetrafluoroethane sulfonate, lithium difluorobis(oxalato)phosphate (LiDFBOP), and lithium bis(oxalato) borate (LiBOB).

### Separator:

A separator may be between the positive electrode and the negative electrode, depending on a type of rechargeable lithium battery. The separator may include at least one of polyethylene, polypropylene, polyvinylidene fluoride or multi-layers thereof having two or more layers and may be a mixed together multilayer such as a polyethylene/polypropylene double-layered separator, a polyethylene/polypropylene/polyethylene triple-layered separator, a polypropylene/polyethylene/polypropylene triple-layered separator, and the like.

The separator may include a porous substrate and a coating layer including an organic material, an inorganic material, or a combination thereof on one surface, or on both surfaces (e.g., one or two opposing surfaces), of the porous substrate.

The porous substrate may be or include a polymer film formed of or including any one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acryl-based polymer.

The inorganic material may be or include an inorganic particle such as at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and an inorganic material may be mixed in one coating layer, or a coating layer including an organic material and a coating layer including an inorganic material may be stacked together.

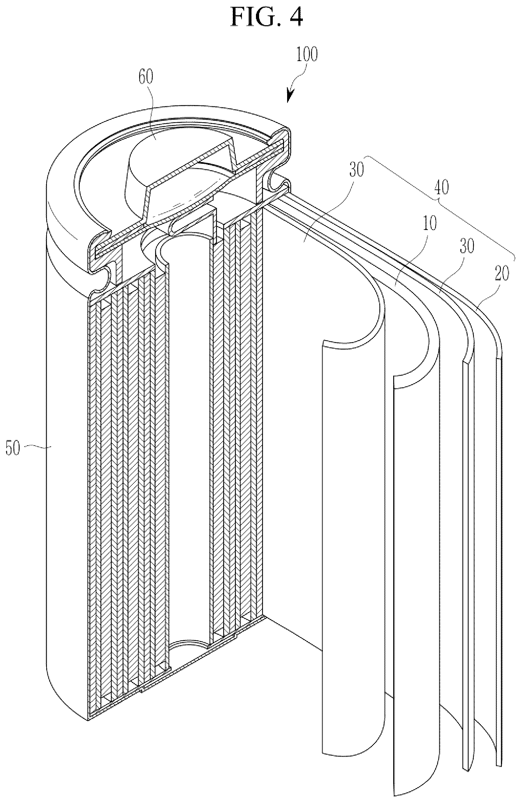

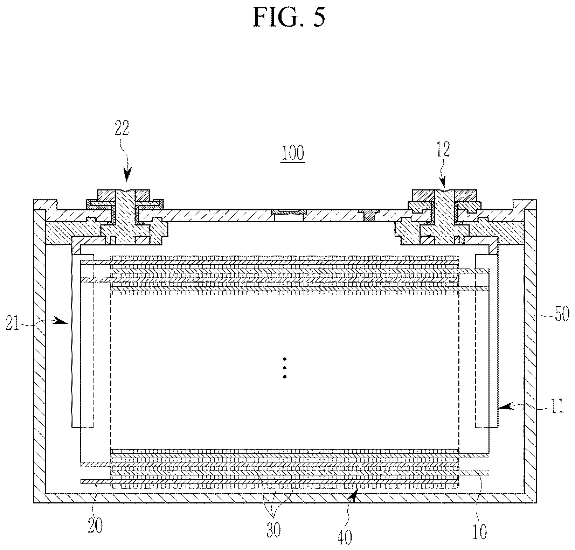

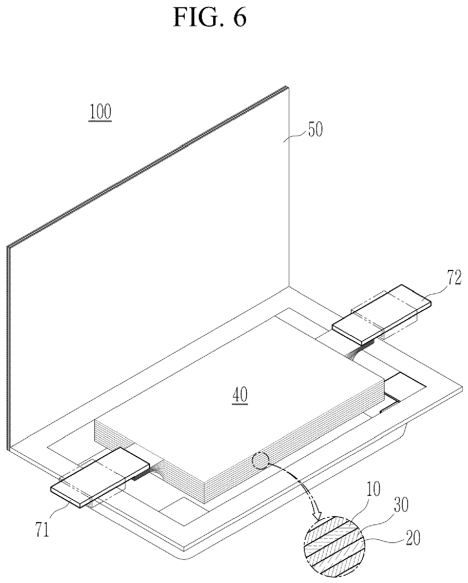

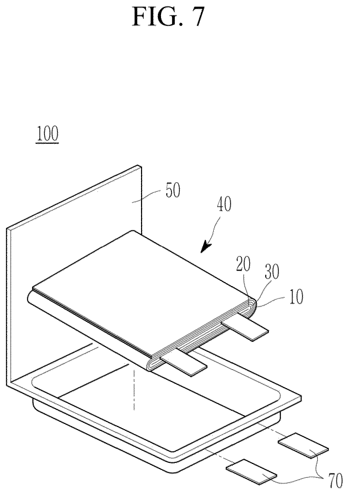

The rechargeable lithium battery may be classified into cylindrical, prismatic, pouch, or coin-type batteries, and the like depending on their shape. FIG. 4 to FIG. 7 are schematic views illustrating a rechargeable lithium battery according to an example embodiment, and FIG. 4 illustrates a cylindrical battery, FIG. 5 illustrates a prismatic battery, and FIG. 6 and FIG. 7 illustrate pouch-type batteries. Referring to FIGS. 4 to 7, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may include a sealing member 60 that seals the case 50, as shown in FIG. 4. In FIG. 5, the rechargeable lithium battery 100 may include a positive electrode lead tab 11 and a positive terminal 12, a negative electrode lead tab 21, and a negative terminal 22. As shown in FIG. 7, the rechargeable lithium battery 100 may include an electrode tab 70, which may form an electrical path for inducing the current formed in the electrode assembly 40 to the outside of the battery 100, or for example, a positive electrode tab 71 and a negative electrode tab 72, as shown in FIG. 6, which may also form an electrical path for inducing the current formed in the electrode assembly 40 to the outside of the battery 100.

The rechargeable lithium battery according to an example embodiment may be applicable to, e.g., automobiles, mobile phones, and/or various suitable types (or kinds) of electric devices, as non-limiting examples.

The following Examples and Comparative Examples are provided in order to highlight characteristics of one or more embodiments, but it is understood that the Examples and Comparative Examples are not to be construed as limiting the scope of the example embodiments, nor are the Comparative Examples to be construed as being outside the scope of the example embodiments. Further, it is understood that the example embodiments are not limited to the particular details described in the Examples and Comparative Example.

### Example 1:

A negative electrode active material prepared by mixing a first graphite having a tapped density of 1.1 g/cm³ and a second graphite having a tapped density of 1.25 g/cm³ at a weight ratio of 1:0, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.1 g/cm³ and a second graphite having a tapped density of 1.25 g/cm³ at a weight ratio of 0:1, a styrene-butadiene rubber, and carboxymethyl cellulose, were mixed at a weight ratio of 97.5:1:1.5 in a water solvent to prepare a negative electrode active material slurry B.

A I region (length (width): 20 mm), a II region (length (width): 25 mm), and a III region (length (width): 20 mm) were separated by boundaries extending along the length direction (longitudinal direction) of a copper current collector with a length (width) of 65 mm, and then the negative electrode active material slurry A was coated on the II region and the negative electrode active material slurry B was coated on the I region and III region.

The coated product was dried and compressed to prepare a negative electrode in which a negative electrode active material layer was formed on the current collector.

A LiNi_{0.8}Co_{0.1}Mn_{0.1}O₂ positive electrode active material of 96 wt%, Ketjen black of 2 wt%, and polyvinylidene fluoride of 2 wt% were mixed in an N-methyl pyrrolidone solvent to prepare a positive electrode active material layer slurry. The positive electrode active material layer slurry was coated on an Al foil current collector, dried, and then compressed to prepare a positive electrode.

The negative electrode, a polyethylene separator, and the positive electrode were stacked to prepare an electrode assembly. The electrode assembly was inserted to a cylindrical full cell case with a length of 80 mm, and an electrolyte, thereby fabricating a cylindrical full cell. The electrolyte was used by dissolving 1.15M LiPF₆ in a mixed solvent of ethylene carbonate, ethylmethyl carbonate, and dimethyl carbonate (in a volume ratio of 3:5:2).

### Example 2:

A negative electrode active material prepared by mixing a first graphite having a tapped density of 1.1 g/cm³ and a second graphite having a tapped density of 1.25 g/cm³ at a weight ratio of 1.5:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.1 g/cm³ and a second graphite having a tapped density of 1.25 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 3:

A negative electrode active material prepared by mixing a first graphite having a tapped density of 1.1 g/cm³ and a second graphite having a tapped density of 1.25 g/cm³ at a weight ratio of 2:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.1 g/cm³ and a second graphite having a tapped density of 1.25 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 4:

A negative electrode active material prepared by mixing a first graphite having a tapped density of 1.1 g/cm³ and a second graphite having a tapped density of 1.25 g/cm³ at a weight ratio of 4:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.1 g/cm³ and a second graphite having a tapped density of 1.25 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Comparative Example 1:

A negative electrode active material prepared by mixing a first graphite having a tapped density of 1.1 g/cm³ and a second graphite having a tapped density of 1.25 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.1 g/cm³ and a second graphite having a tapped density of 1.25 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 5:

A negative electrode active material prepared by mixing a first graphite having a tapped density of 0.9 g/cm³ and a second graphite having a tapped density of 1.25 g/cm³ at a weight ratio of 1.5:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 0.9 g/cm³ and a second graphite having a tapped density of 1.25 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 6:

A negative electrode active material prepared by mixing a first graphite having a tapped density of 1 g/cm³ and a second graphite having a tapped density of 1.25 g/cm³ at a weight ratio of 1.5:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1 g/cm³ and a second graphite having a tapped density of 1.25 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 7:

A negative electrode active material prepared by mixing a first graphite having a tapped density of 1.2 g/cm³ and a second graphite having a tapped density of 1.25 g/cm³ at a weight ratio of 1.5:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.2 g/cm³ and a second graphite having a tapped density of 1.25 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Comparative Example 2:

A negative electrode active material prepared by mixing a first graphite having a tapped density of 1.3 g/cm³ and a second graphite having a tapped density of 1.25 g/cm³ at a weight ratio of 1.5:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.3 g/cm³ and a second graphite having a tapped density of 1.25 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 8:

A negative electrode active material prepared by mixing a first graphite having a tapped density of 1.1 g/cm³ and a second graphite having a tapped density of 1.2 g/cm³ at a weight ratio of 1.5:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.1 g/cm³ and a second graphite having a tapped density of 1.2 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 9:

A negative electrode active material prepared by mixing a first graphite having a tapped density of 1.1 g/cm³ and a second graphite having a tapped density of 1.3 g/cm³ at a weight ratio of 1.5:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.1 g/cm³ and a second graphite having a tapped density of 1.3 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 10:

A negative electrode active material prepared by mixing a first graphite having a tapped density of 1.1 g/cm³ and a second graphite having a tapped density of 1.4 g/cm³ at a weight ratio of 1.5:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.1 g/cm³ and a second graphite having a tapped density of 1.4 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 11:

A negative electrode active material prepared by mixing a first graphite having a tapped density of 1.1 g/cm³ and a second graphite having a tapped density of 1.5 g/cm³ at a weight ratio of 1.5:1, a styrene-butadiene rubber, and carboxymethyl cellulose, were mixed at a weight ratio of 97.5:1:1.5 in a water solvent to prepare a negative electrode active material slurry A.

A negative electrode active material prepared by mixing a first graphite having a tapped density of 1.1 g/cm³ and a second graphite having a tapped density of 1.5 g/cm³ at a weight ratio of 1:1, a styrene-butadiene rubber, and carboxymethyl cellulose, were mixed at a weight ratio of 97.5:1:1.5 in a water solvent to prepare a negative electrode active material slurry B.

A negative electrode and a cylindrical full cell with a length of 80 mm were fabricated by the same procedure in Example 1, with a difference that the negative electrode active material slurry A and the negative electrode active material slurry B were utilized.

### Example 12:

A I region (length (width): 15 mm), a II region (length (width): 35 mm), and **a III** region (length (width): 15 mm) were separated by boundaries extending along the length direction (longitudinal direction) of a copper current collector with a length (width) of 65 mm, and then the negative electrode active material slurry A of Example 2 was coated on the II region and the negative electrode active material slurry B of Example 2 was coated on the I region and **III** region.

The coated product was dried and compressed to prepare a negative electrode in which a negative electrode active material layer was formed on the current collector.

A cylindrical full cell with a length of 80 mm was fabricated by the same procedure in Example 1, except for using the negative electrode.

### Example 13:

A I region (length (width): 22 mm), a II region (length (width): 20 mm), and a III region (length (width): 23 mm) were separated by boundaries extending along the length direction (longitudinal direction) of a copper current collector with a length (width) of 65 mm, and then the negative electrode active material slurry A of Example 2 was coated on the II region and the negative electrode active material slurry B of Example 2 was coated on the I region and III region.

The coated product was dried and compressed to prepare a negative electrode in which a negative electrode active material layer was formed on the current collector.

A cylindrical full cell with a length of 80 mm was fabricated by the same procedure in Example 1, except for using the negative electrode.

### Example 14:

A I region (length (width): 26 mm), a II region (length (width): 13 mm), and a III region (length (width): 26 mm) were separated by boundaries extending along the length direction (longitudinal direction) of a copper current collector with a length (width) of 65 mm, and then the negative electrode active material slurry A of Example 2 was coated on the II region and the negative electrode active material slurry B of Example 2 was coated on the I region and III region.

The coated product was dried and compressed to prepare a negative electrode in which a negative electrode active material layer was formed on the current collector.

A cylindrical full cell with a length of 80 mm was fabricated by the same procedure in Example 1, except for using the negative electrode.

### Experimental Example 1) Electrolyte impregnation

In the cells according to Examples 1 to 14 and Comparative Examples 1 to 2, the electrolyte impregnation for the I region, the II region, and the III region was measured.

The impregnation measurement was confirmed by injecting the electrolyte to fabricate the cell, disassembling the cell after 1 hour, and visually observing the state of the separator in contact with the negative electrode.

The results are shown in Table 3 below.

### Experimental Example 2) Cycle-life characteristic

The cells according to Examples 1 to 14, and Comparative Examples 1 to 2 were once charged and discharged at 1.0 C within a voltage of 4.2 V to 2.5 V at 10 °C, and then charged and discharged at 0.5 C for 200 cycles. A ratio of 100^{th} discharge capacity at 0.5 C relative to the first (1^{st}) discharge capacity at 1.0 C was calculated. The results are shown in Table 3 below as a capacity retention.

The configurations of the negative electrode active material layer according to Examples 1 to 14 and Comparative Examples 1 to 2 are shown in Table 1 and Table 2 below.

**Table 1**

| | Tapped density (g/cm³) | | Mixing ratio of first graphite and second graphite (II region) | | Amount of first graphite (wt%, II region) | Mixing ratio of first graphite and second graphite (I region and III region) | | Amount of first graphite (wt%, I and III region) |
|---|---|---|---|---|---|---|---|---|
| | First graphite | Second graphite | First graphite | Second graphite | | First graphite | Second graphite | |
| Comparative Example 1 | 1.1 | 1.25 | 1 | 1 | 50 | 1 | 1 | 50 |
| Example 1 | 1.1 | 1.25 | 1 | 0 | 100 | 0 | 1 | 0 |
| Example 2 | 1.1 | 1.25 | 1.5 | 1 | 60 | 1 | 1 | 50 |
| Example 3 | 1.1 | 1.25 | 2 | 1 | 66.7 | 1 | 1 | 50 |
| Example 4 | 1.1 | 1.25 | 4 | 1 | 80 | 1 | 1 | 50 |
| Example 5 | 0.9 | 1.25 | 1.5 | 1 | 60 | 1 | 1 | 50 |
| Example 6 | 1 | 1.25 | 1.5 | 1 | 60 | 1 | 1 | 50 |
| Example 7 | 1.2 | 1.25 | 1.5 | 1 | 60 | 1 | 1 | 50 |
| Comparative Example 2 | 1.3 | 1.25 | 1.5 | 1 | 60 | 1 | 1 | 50 |
| Example 8 | 1.1 | 1.2 | 1.5 | 1 | 60 | 1 | 1 | 50 |
| Example 9 | 1.1 | 1.3 | 1.5 | 1 | 60 | 1 | 1 | 50 |
| Example 10 | 1.1 | 1.4 | 1.5 | 1 | 60 | 1 | 1 | 50 |
| Example 11 | 1.1 | 1.5 | 1.5 | 1 | 60 | 1 | 1 | 50 |
| Example 12 | 1.1 | 1.25 | 1.5 | 1 | 60 | 1 | 1 | 50 |
| Example 13 | 1.1 | 1.25 | 1.5 | 1 | 60 | 1 | 1 | 50 |
| Example 14 | 1.1 | 1.25 | 1.5 | 1 | 60 | 1 | 1 | 50 |

**Table 2**

| | Length of negative electrode active material (width, mm) | | | II region length (%) |
|---|---|---|---|---|
| | I | II | III | |
| Comparative Example 1 | 20 | 25 | 20 | 38.5 |
| Example 1 | 20 | 25 | 20 | 38.5 |
| Example 2 | 20 | 25 | 20 | 38.5 |
| Example 3 | 20 | 25 | 20 | 38.5 |
| Example 4 | 20 | 25 | 20 | 38.5 |
| Example 5 | 20 | 25 | 20 | 38.5 |
| Example 6 | 20 | 25 | 20 | 38.5 |
| Example 7 | 20 | 25 | 20 | 38.5 |
| Comparative Example 2 | 20 | 25 | 20 | 38.5 |
| Example 8 | 20 | 25 | 20 | 38.5 |
| Example 9 | 20 | 25 | 20 | 38.5 |
| Example 10 | 20 | 25 | 20 | 38.5 |
| Example 11 | 20 | 25 | 20 | 38.5 |
| Example 12 | 15 | 35 | 15 | 53.8 |
| Example 13 | 22 | 20 | 23 | 30.8 |
| Example 14 | 26 | 13 | 26 | 20 |

**Table 3**

| | Impregnation of injection | Capacity retention (%) |
|---|---|---|
| Comparative Example 1 | No impregnation at II region | 70 |
| Example 1 | uniform | 84 |
| Example 2 | uniform | 89 |
| Example 3 | uniform | 91 |
| Example 4 | uniform | 87 |
| Example 5 | uniform | 82 |
| Example 6 | uniform | 87 |
| Example 7 | uniform | 82 |
| Comparative Example 2 | No impregnation at II region | 71 |
| Example 8 | uniform | 82 |
| Example 9 | uniform | 87 |
| Example 10 | uniform | 84 |
| Example 11 | uniform | 81 |
| Example 12 | uniform | 85 |
| Example 13 | uniform | 87 |
| Example 14 | uniform | 82 |

As shown in Table 3 above, Example 1 in which the first graphite with low tapped density was used as the negative electrode active material in the II region and the second graphite with high tapped density was used as the negative electrode active material in the I region and the III region, exhibited better electrolyte impregnation, indicating that the electrolyte was substantially uniformly impregnated in the cell. The desired or improved cycle-life characteristics are exhibited.

The cells of Examples 2 to 14 in which the first graphite was included at the larger amount than the second graphite in the II region, exhibited desired or improved electrolyte impregnation and desired or improved cycle-life characteristic.

Whereas, in the case of Comparative Example 1 in which the first graphite and the second graphite were used at the same amount in the I region, the II region, and the **III** region, the electrolyte was not impregnated in the II region, and the cycle-life characteristic was degraded.

In the case of Comparative Example 2 in which the first graphite with the high tapped density of 1.3 g/cm³ was utilized in the II region at the larger amount, the electrolyte was not impregnated in the II region, and a poor cycle-life characteristic was exhibited.

While this disclosure has been described in connection with what is presently considered to be practical example embodiments, it is to be understood that the disclosure is not limited to the disclosed embodiments, but, on the contrary, is intended to cover various modifications and equivalent arrangements included within the spirit and scope of the appended claims.

## Claims

1. A negative electrode (20) for a rechargeable lithium battery (100), the negative electrode (20) comprising:
a current collector (22); and
a negative electrode active material layer (24) on the current collector (22),
wherein the negative electrode active material layer (24) comprises a I region, a II region and a III region, which are separated by boundaries extending along a longitudinal direction,
the II region comprises a first crystalline carbon negative electrode active material,
at least one of the I region and the III region comprises a second crystalline carbon negative electrode active material, and
a tapped density of the first crystalline carbon negative electrode active material is lower than a tapped density of the second crystalline carbon negative electrode active material.

2. The negative electrode (20) as claimed in claim 1, wherein the tapped density of the first crystalline carbon negative electrode active material is in a range of about 1.2 g/cm³ or less.

3. The negative electrode (20) as claimed in claim 1 or 2, wherein the tapped density of the first crystalline carbon negative electrode active material is in a range of ≥ 0.9 g/cm³ to ≤ 1.2 g/cm³.

4. The negative electrode (20) as claimed in any one of claims 1 to 3, wherein the tapped density of the second crystalline carbon negative electrode active material is equal to or more than about 1.2 g/cm³.

5. The negative electrode (20) as claimed in any one of claims 1 to 4, wherein the tapped density of the second crystalline carbon negative electrode active material is in a range ofabout 1.2 g/cm³ and about 1.5 g/cm³.

6. The negative electrode (20) as claimed in any one of claims 1 to 5, wherein a length of the II region is in a range of ≥ 20% to ≤ 54% based on 100% of the length of the negative electrode active material layer (24).

7. The negative electrode (20) as claimed in any one of claims 1 to 6, wherein the II region further comprises a second crystalline carbon negative electrode active material, and in the II region, an amount of the first crystalline carbon negative electrode active material is more than about 50 wt% based on a total 100 wt% of the first crystalline carbon negative electrode active material and the second crystalline carbon negative electrode active material.

8. The negative electrode (20) as claimed in any one of claims 1 to 7, wherein the II region further comprises a second crystalline carbon negative electrode active material and wherein in the II region, a mixing ratio of the first crystalline carbon negative electrode active material to the second crystalline carbon negative electrode active material is in a range of more than about 50: less than about 50 to about 99:about 1 by weight ratio.

9. The negative electrode (20) as claimed in any one of claims 1 to 8, wherein the I region and the III region further comprise a first crystalline carbon negative electrode active material and in each of the I region and the III region, and an amount of the first crystalline carbon negative electrode active material is equal to less than about 50 wt% based on a total 100 wt% of the first crystalline carbon negative electrode active material and the second crystalline carbon negative electrode active material.

10. The negative electrode (20) as claimed in any one of claims 1 to 9, wherein the I region and the III region further comprise a first crystalline carbon negative electrode active material and wherein in at least one of the I region and the III region, a mixing ratio of the first crystalline carbon negative electrode active material to the second crystalline carbon negative electrode active material is in a range of about 50: about 50 to about 1:about 99 by weight ratio.

11. The negative electrode (20) as claimed in any one of claims 1 to 10, wherein the first crystalline carbon negative electrode active material comprises at least one of natural graphite and artificial graphite.

12. The negative electrode (20) as claimed in any one of claims 1 to 11, wherein the second crystalline carbon negative electrode active material comprises at least one of natural graphite and artificial graphite.

13. A rechargeable lithium battery (100), comprising:
the negative electrode (20) of any one of claim 1 to claim 12;
a positive electrode (10); and
a non-aqueous electrolyte.

14. The rechargeable lithium battery (100) as claimed in claim 13, wherein the rechargeable lithium battery (100) comprises a cylindrical battery.

15. The rechargeable lithium battery (100) as claimed in claim 13 or 14, wherein the rechargeable lithium battery (100) has a height in a range of ≥ 70 mm to ≤ 100 mm.
